# EUROPÄISCHE PATENTSCHRIFT

(11) **EP 2 641 722 B1**
(45) Veröffentlichungstag und Bekanntmachung des Hinweises auf die Patenterteilung: **09.03.2016**
(21) Anmeldenummer: 13001405.3
(22) Anmeldetag: 19.03.2013
(51) Int. Cl.: B29C 51/34

(54) **Vorrichtung zur Vakuum-Formung**
Apparatus for vacuum forming
Dispositif de formage par le vide

(30) Priorität: 21.03.2012 IT BZ20120011
(43) Veröffentlichungstag der Anmeldung: 25.09.2013
(73) Patentinhaber: Enetec Ecoform Srl, 39057 Appiano Frazione Frangarto (BZ) (IT)
(72) Erfinder: Pezzei, Christian, 39057 Appiano (BZ) (IT)
(74) Vertreter: Oberosler, Ludwig

(56) Entgegenhaltungen:
- EP-A1- 1 790 450
- FR-A- 1 531 739
- GB-A- 1 266 839

## Beschreibung

Die Erfindung bezieht sich auf eine Vorrichtung zur Vakuum-Formung für die Herstellung von Trägerplatten aus thermoplastischem Werkstoff welche mehrere pilzförmige Vorsprünge mit Hinterschneidungen, zwecks bequemer Verlegung und Halterung biegsamer Rohre von Heizungsanlagen mit Plattenheizkörpern, aufweisen. Die besagten pilzförmigen Vorsprünge sind so angeordnet, dass die biegsamen Rohre durch Einschnappen in die freien Zwischenräumen, zwischen den pilzartigen Vorsprüngen, erfolgt indem diese durch radiale Vorsprünge welche sich am äußersten oberen Rand jedes pilzartigen, im Querschnitt runden oder abgerundeten, Vorsprunges befinden, zurückgehalten werden. Platten dieser Art sind beispielsweise aus der EP 1770337 A1 oder aus der DE 3317131 A1 bekannt.

Vorrichtungen zur Vakuum-Formung für die Herstellung der besagten Trägerplatten zum Verlegen der flexiblen Rohre von Heizungsanlagen mit Plattenheizkörpern, sind aus der DE 10010341 A1 bekannt. Das Werkzeug für die Vakuum-Formung umfasst eine Grundplatte welche meist mit mehreren Vorrichtungen für die Ausformung pilzartiger, mit Hinterschneidungen versehener, Vorsprünge bestückt ist, diese Vorrichtungen für die Ausformung bestehen wesentlich aus einem Grundkörper an welchem mindestens ein Vorsprungelement angebracht ist welches aus einer, während der Formung eingenommener, Arbeitsstellung in eine, während der Entnahme der geformten Platte eingenommener, Ausraststellung beweglich ist. Das besagte Vorsprungelement ragt mit dem, dem Lagerende entgegengesetzten, Ende über die äußere, seitliche Fläche des Grundkörpers hinaus.

Aus der EP 1790450 B1 ist eine Vorrichtung zur Vakuum-Formung von Platten zum Verlegen und Haltern der Rohre von Heizungsanlagen mit Plattenheizkörpern bekannt, bei welcher an einem Grundkörper Vorsprungelemente vorgesehen sind welche, während der Formungsphase, durch eine, am Grundkörper axial bewegliche Vorrichtung in einer, von der äußeren Seitenfläche des Grundkörpers abragenden Position, zurückgehalten wird. Vor der Entnahme der geformten Platte wird die besagte Rückhaltevorrichtung axial bewegt so dass die Vorsprungelemente frei sind um eine Schwenk- und Gleitbewegung auszuführen, wobei sie, während der Entnahme der geformten Platte, in eine Position gezogen werden in welcher sie nicht über die äußere Seitenfläche des Grundkörpers hinausragen. Um diese Bewegungen ausführen und die Arbeitsposition, sowie die Ausrastposition, einnehmen zu können, sind die Vorsprungelemente frei in einem konischen Sitz am Grundkörper gelagert, wobei dieser Sitz seitliche, parallel zur Entformungsrichtung verlaufende Führungsflächen aufweist. Bei, in Richtung Grundfläche des Grundkörpers, gezogener Rückhaltevorrichtung, sind die besagten Vorsprungelemente in ihrer Arbeitsstellung blockiert, wobei sie mit ihrem oberen äußeren Teil über die seitliche äußere Fläche des Grundkörpers hinausragen während, bei angehobener Rückhaltevorrichtung, beim Abziehen der ausgeformten Trägerplatte, die besagten Vorsprungelemente frei sind um in ihre Sitze zurückzugleiten und um das Abziehen der Platte nicht zu behindern, wobei die Platte, entsprechend der Position der Vorsprungelemente, je einen vorspringenden Bereich aufweisen wird welcher eine Hinterschneidung für die Halterung des Heizungsrohres bildet.

Diese bekannten Formungsvorrichtungen weisen den Nachteil auf, dass die Vorsprungelemente am Grundkörper so gelagert sind, dass sie in entsprechenden Sitzen frei, mit einem gewissen Spiel, gleiten oder/und schwenken können, wobei sie nur durch seitliche, parallel zur Richtung des Abziehens der Trägerplatten verlaufende, Flächen geführt sind, was zur Folge hat, dass diese Vorsprungelemente, während des Abziehens der Trägerplatte, zuweilen innen an der Trägerplatte hängen bleiben und dadurch nicht die Ausraststellung einnehmen, was Verformungen oder Beschädigungen an der Trägerplatte bewirkt, bzw. das Herausziehen der Vorsprungelemente aus ihrem Sitz am Grundkörper zur Folge hat.

Aus der WO 2005/108230 A1 ist ein Tiefziehwerkzeug und Verfahren zum Tiefziehen einer Folie bekannt, womit Schnappdeckelverschlüsse für Behälter hergestellt werden, bei denen der Deckel in einem Randbereich Einbuchtungen eingeformt aufweist, die beim Verschließen des Behälters in Eingriff mit einem Rand des Behälters gelangen und so für eine lösbare Verbindung zwischen dem Deckel und dem Becher sorgen. Dieses Werkzeug weist drei Vorsprungelemente auf welche radial am Rand der Tiefziehmatritze eingelassen sind und in Arbeitsstellung mit dem vorderen Ende radial über den inneren Rand der Tiefziehausnehmung ragen, während das entgegengesetzte hintere Ende, an der Matritze, nach oben, bzw. nach außen, schwenkbar gelagert ist, damit die geformte Folie, ohne beschädigt zu werden, abgezogen werden kann. Diese Vorsprungelemente nehmen die Arbeitsstellung selbsttätig durch Schwerkraft ein und werden nicht in dieser Stellung gesichert.

Aus der GB 1266839 ist ein Verfahren und eine Vorrichtung zur Abdeckung von Hohlräumen bekannt; in der gezeigten Vorrichtung wird ein Stößel (plunger 46) vertikal bewegt welcher am oberen Ende eine Führungsplatte (guide plate 50) trägt. An dieser Führungsplatte ist in jedem der Eckbereiche ein Finger (finger 56) mittels horizontalem Lagerzapfen schwenkbar angelenkt. Diese Finger werden, durch die Bewegung der Führungsplatte in die obere Endposition, in Arbeitsstellung gebracht, wobei die freien Fingerenden über den oberen Rand eines Grundkörpers (skirt member 60) ragen um am auszuformenden thermoplastischen Folienmaterial, über die Außenfläche des Grundkörpers vorstehende, Ausbuchtungen zu erzeugen. Vor der Entnahme des aus Folienmaterial geformten Gegenstandes, wird die Führungsplatte mit den Fingern innen im Grundkörper nach unten bewegt, wobei die Fingerenden aus den Ausbuchtungen schwenkend zurückgezogen werden und sich an die Innenwand des Grundkörpers anlegen. Die Finger werden nicht durch eine Rückhaltevorrichtung in ihrer ausgefahrenen Arbeitsposition gesichert. Der Mechanismus für die Betätigung der Finger erfordert, dass der Grundkörper einen relativ großen Innenraum für die Aufnahme der Führungsplatte samt den Fingern aufweist, dies verhindert die Anwendung an relativ kleinen Grundkörpern wie sie für die Herstellung von Trägerplatten für flexible Rohre verlangt werden. Das Herausziehen der Finger aus den Ausbuchtungen am geformten Folienmaterial erfolgt unter Belastung und eventueller Beschädigung des Produktes weil die Finger über die obere, innere Kante des Grundkörpers gekippt werden. Weiters erfordert der gezeigte Betätigungsmechanismus eine relativ große Bauhöhe des Grundkörpers was sich bei der Anwendung für die Herstellung von Trägerplatten für flexible Rohre nachteilig auswirken würde, weil die Stärke der Plattenheizkörper entsprechend vergrößert werden müsste.

Die Erfindung stellt sich die Aufgabe eine Vorrichtung für die Vakuum-Formung von Trägerplatten der obgenannten Art, für flexible Rohre von Heizungsanlagen mit Plattenradiatoren zu schaffen welche einen schnellen Formungsablauf, ohne besondere Instandhaltung und frei von Beschädigungen, hervorgerufen durch Hängenbleiben einzelner Vorsprungselemente, an der ausgeformten Trägerplatte ermöglicht.

Zur Lösung dieser Aufgabe schlägt die Erfindung die Drehlagerung der einzelnen Vorsprungelemente, gemäß einer zur Abziehrichtung der Trägerplatte quer verlaufenden Achse, am Grundkörper vor. Erfindungsgemäß sind die Vorsprungelemente so gelagert, dass die Achse der Drehlagerung so versetzt ist, dass die vorspringende Arbeitsposition durch Wirkung der Schwerkraft eingenommen wird. Um die vorspringende Arbeitsposition zu sichern und zu blockieren, kann auch eine bekannte Rückhaltevorrichtung vorgesehen sein. Erfindungsgemäß kann die Drehlagerung der Vorsprungelemente dadurch erfolgen, dass diese ein Lagerende mit wesentlich halbzylindrischem Sitz aufweisen welcher mit einem entsprechenden vorstehendem Zahn am Grundkörper zusammenwirkt, indem dieser in den genannten Sitz eingreift, wodurch die Vorsprungelemente eine Schwenkbewegung und eventuell zusätzlich eine Gleitbewegung ausführen können.

Diese Lagerung der Vorsprungelemente ermöglicht weiters, dass eine obere flache Oberfläche an den pilzförmigen Vorsprüngen geschaffen wird, dies ist auch im Falle einer bekannten beweglichen Rückhaltevorrichtung möglich indem die Rückhalteplatte in einen entsprechenden Sitz am Grundkörper und an den Vorsprungelementen eingelassen ist. Erfindungsgemäß werden die Vorsprungelemente durch einen, koaxial zur Achse des Grundkörpers, in diesen ortsfest eingesetzten Bolzen oder durch den axial im Grundkörper beweglich gelagerten Schaft der Rückhaltevorrichtung, in Bezug auf die jeweiligen eingreifenden Zähnen am Grundkörper, unabhängig von ihrer Arbeitsstellung, in Eingriff gehalten.

Die Erfindung wird nachfolgend anhand zweier, in den beigelegten Zeichnungen schematisch dargestellter, erfindungsgemäßer, vorzuziehender Ausführungsbeispiele der Vorrichtung für das Vakuum-Formen näher erklärt, dabei erfüllen die Zeichnungen rein erklärenden, nicht begrenzenden Zweck.

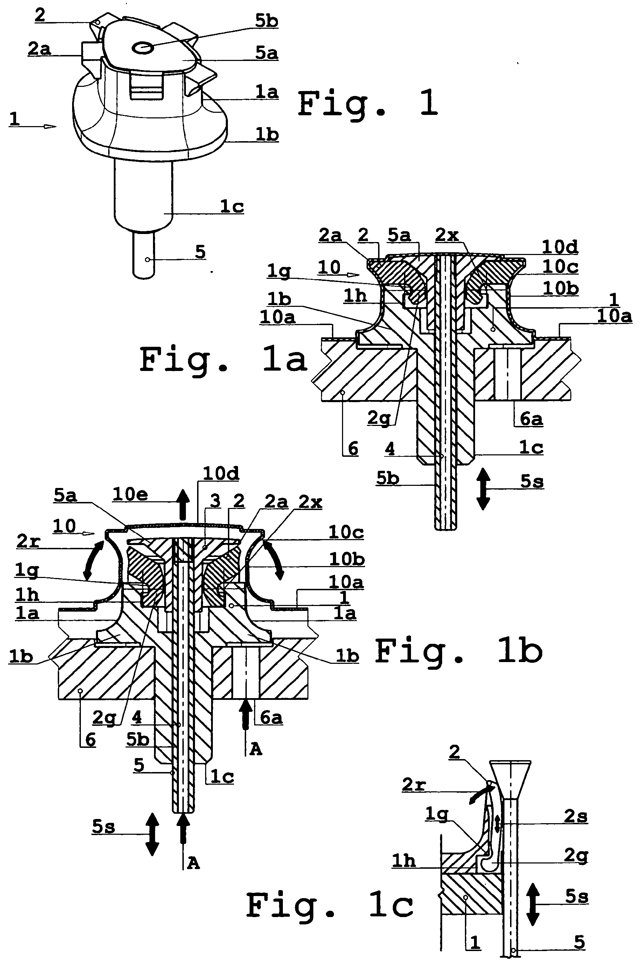

Die Fig. 1 zeigt in perspektivischer Darstellung eine erfindungsgemäße Form-Vorrichtung ohne Grundplatte mit, von einer bekannten Rückhaltevorrichtung in Arbeitsstellung zurückgehaltenen Vorsprungelementen, wobei diese mit einem wesentlich halbzylindrischen Sitz schwenkbar jeweils an einem entsprechenden, vom Grundkörper der Form-Vorrichtung abstehenden, Zahn gelagert sind.

Die Fig. 1a ist eine Schnittdarstellung gemäß einer vertikalen Schnittfläche durch die in Fig. 1 gezeigten Form-Vorrichtung, wobei die Vorsprungselemente radial vorstehend in Arbeitsstellung gezeigt sind und das thermoplastische Laminat, infolge der Vakuum-Formung, an der Form-Vorrichtung anliegt.

Die Fig. 1b zeigt die selbe in Fig. 1a gezeigte Schnittdarstellung mit der Platte aus thermoplastischem Laminat in Abziehphase, mit angehobener Rückhaltevorrichtung und mit den Vorsprungelementen in Ausrastposition.

Die Fig. 1c ist eine Schnittdarstellung durch einen Teil einer erfindungsgemäßen Form-Vorrichtung, wobei der Grundkörper einen extrem kleinen Querschnitt aufweist.

Die erfindungsgemäße Form-Vorrichtung 1 besteht wesentlich aus einem zylindrischen oder im Querschnitt abgerundeten Grundkörper 1 a mit einem abstehenden Auflagerand 2b und einem unteren Einsetzschaft 1c für die Grundplatte 6. Der Grundkörper 1 a weist oben mindestens einen Sitz 1 h auf in welchem ein Vorsprungelement 2 schwenkbar 2r gelagert ist wobei dieses eine Arbeitsstellung einnehmen kann indem das äußere Ende 2a radial über die vertikale Außenfläche des Grundkörpers 1a hinausragt, und eine Ausraststellung einnehmen kann indem das besagte Ende 2a mit der vertikalen Außenfläche des Grundkörpers 1a fluchtet.

Die Vorsprungelemente 2 sind in Ihren Sitzen mittels Lagerende 2g mit wesentlich halbzylindrischem Sitz gelagert, in welchen ein entsprechender, vom Grundkörper abstehender, Zahn 1g eingreift. Diese Lagerung ermöglicht, dass jedes Vorsprungelement 2 eine Schwenkbewegung 2r und, entsprechend dem Bewegungsspiel zwischen dem Sitz am Lagerende 2g und dem in diesen eingreifenden Zahn 1g, auch eine Gleitbewegung 2s ausführen kann.

Um oben an den Form-Vorrichtungen 1 eine ebene Fläche zu schaffen, ist oben am Grundkörper 1a eine Platte 3 vorgesehen welche, die Enden 2f der Vorsprungelemente 2, innerhalb der entsprechenden Sitze 1 h, sichert.

Die Erfindung schließt nicht aus, dass die Arbeitsstellung der Vorsprungelemente 2 von einer bekannten Rückhaltevorrichtung bestimmt wird welche aus einem, innen in der Form-Vorrichtung 1 axial verschiebbaren 5s, hohlen Schaft 5 und einer Rückhalteplatte 5a besteht. Diese Rückhalteplatte 5a, welche eine gewisse Stärke hat, kann in Rückhaltestellung, und mit den Vorsprungelementen in Arbeitsstellung, eine eingelassene Stellung, einnehmen so dass an den pilzartigen Vorsprüngen der Trägerplatte 10 eine Kopffläche 10d ohne Überstände erhalten wird.

Während der Vakuum Formphase müssen die Vorsprungelemente 2, durch Schwerkraft oder eventuell durch die eingezogene Rückhaltevorrichtung 5, 5a, die vorstehende Arbeitsstellung einnehmen, anschließend wird die Luft A über eine Bohrung 4, welche an jeder Form-Vorrichtung 1 vorgesehen ist, und über Bohrungen 6a, welche an der Grundplatte 6 im Bereich des vorstehenden Randes 1b vorgesehen sind, abgesaugt um dadurch zu erreichen, dass das thermoplastische Laminat sich an die Außenflächen der Form-Vorrichtung 1 anlegt so dass eine Trägerplatte 10, mit einer ebenen Auflagefläche 10a, mit einer zylindrischen oder abgerundeten vertikalen Fläche 10b, mit einer Hinterschneidung 10c, entsprechend jedem der Vorsprungelemente 2, und mit einer oberen ebenen Fläche 10d, ausgeformt wird. Für die Abziehphase 10e der ausgeformten Trägerplatte 10, wird Luft A über die Bohrungen 4 und 6a eingeblasen und wird die eventuelle Rückhaltevorrichtung 5, 5a angehoben; die Vorsprungelemente 2 können, infolge des Anhebens 10e der Trägerplatte 10, frei in die Ausraststellung schwenken 2r, wobei sie die Hinterschneidungen 10c an der Trägerplatte 10 verlassen.

Die erfindungsgemäße Lagerung der Vorsprungselemente 2 sichert, während aller Phasen der Vakuum-Formung und während des Abziehens 10e der geformten Trägerplatte 10, eine reguläre Bewegung der Vorsprungelemente 2, auch im Falle hoher Produktionsrhythmen, ohne Hemmungen und ohne eine besondere Wartung zu beanspruchen, nachdem zwischen dem Sitz am Lagerende 2g des Vorsprungelements 2 und dem Zahn 1g in allen Richtungen genügend Spiel vorgesehen ist.

## Patentansprüche

1. Vorrichtung zur Vakuum-Formung von Trägerplatten für flexible Rohre von Plattenheizkörpern, bestehend aus einem zylindrischen, oder mit abgerundetem Querschnitt versehenem, Grundkörper (1a) welcher im unteren Bereich einen vorstehenden Rand (1b) und einen Schaft (1c), zwecks Einsatz in eine Grundplatte (6), aufweist und im oberen Bereich mindestens einen Sitz (1 h) für eines der beiden Enden eines beweglichen Vorsprungelementes (2) aufweist, wobei dieses Vorsprungelement (2) mit einem der beiden Enden in ihrem jeweiligen Sitz (1h) am Grundkörper (1a) gelagert ist um, aus einer Arbeitsstellung in eine Ausraststellung schwenken (2r) zu können, wobei die Arbeitsstellung des oder der Vorsprungelemente (2) durch eine Rückhaltevorrichtung (5, 5a) gesichert ist welche axial verschiebbar (5s) im Inneren der Form-Vorrichtung (1) gelagert ist, und dass die Rückhalteplatte (5a) dieser Rückhaltevorrichtung, in Rückhaltestellung, vollständig oder teilweise in einen entsprechenden Sitz welcher in der oberen Fläche des Grundkörpers (1a) und an den Vorsprungelementen (2) vorgesehen ist, eingelassen ist, **dadurch gekennzeichnet, dass** die Vorsprungelemente (2) an ihren Lagerenden (2g) einen wesentlich halbzylindrischen Sitz aufweisen in welchen ein vom Grundkörper (1a) abstehenden Zahn (1g) eingreift.

2. Vorrichtung zur Vakuum-Formung gemäß Anspruch 1, **dadurch gekennzeichnet, dass** der Schaft (5) der Rückhaltevorrichtung (5, 5a) welcher sich vertikal durch den Sitz (1h) des Grundkörpers (1a) in welchem die Lagerenden (2g) mit wesentlich halbzylindrischem Sitz der Vorsprungelemente (2) gelagert sind, erstreckt, die Eingriffposition der besagten Enden (2g) am, vom Grundkörper (1a) abstehenden Zahn (1g), sichert.

3. Vorrichtung zur Vakuum-Formung gemäß der Ansprüche 1 und 2, **dadurch gekennzeichnet, dass** der Schaft (5) der Rückhaltevorrichtung (5, 5a) durch einen entsprechenden, fest im Grundkörper eingesetzten, Bolzen ersetzt ist, dass die Platte (5a) der Rückhaltevorrichtung durch eine feste am oberen Bolzenende montierte Platte ersetzt ist und dass zwischen dieser Platte und den Vorsprungelementen (2) ein Bewegungsspiel vorgesehen ist.

## Claims

1. A device for the vacuum forming of support panels for flexible pipes of panel radiators, consisting of a main body (1a) which is cylindrical or is provided with a rounded cross-section and which has in the lower region a protruding edge (1b) and a shaft (1c) for the purpose of insertion into a baseplate (6) and which has in the upper region at least one seat (1h) for one of the two ends of a movable projecting element (2), wherein this projecting element (2) is borne by one of the two ends in its respective seat (1h) on the main body (1a) so as to be able to pivot (2r) from a working position into a disengaged position, wherein the working position of the projecting element(s) (2) is secured by a retaining device (5, 5a) which is borne in such a way as to be axially displaceable (5s) in the interior of the forming device (1), and wherein the retaining plate (5a) of this retaining device, in the retaining position, is completely or partially sunk into a corresponding seat which is provided in the upper face of the main body (1a) and on the projecting elements (2), **characterized in that** the projecting elements (2) have at their bearing ends (2g) a substantially semi-cylindrical seat, in which a tooth (1g) which protrudes from the main body (1a) engages.

2. The device for vacuum forming according to claim 1, **characterized in that** the shaft (5) of the retaining device (5, 5a), which extends vertically through the seat (1h) of the main body (1a) in which the bearing ends (2g) of the projecting elements (2) are borne, said bearing ends having a substantially semi-cylindrical seat, secures the engaged position of said ends (2g) on the tooth (1g) protruding from the main body (1a).

3. The device for vacuum forming according to claims 1 and 2, **characterized in that** the shaft (5) of the retaining device (5, 5a) is replaced by a corresponding bolt which is fixedly inserted in the main body, **in that** the plate (5a) of the retaining device is replaced by a fixed plate mounted on the upper bolt end, and **in that** movement play is provided between said plate and the projecting elements (2).

## Revendications

1. Dispositif de formage par le vide de plaques support pour tuyaux flexibles de radiateurs à plaques, composé d'un corps de base (1a) cylindrique ou muni d'une section arrondie, lequel présente, dans sa partie inférieure, un bord en saillie (1b) et une tige (1c) prévus pour l'insertion dans une plaque de base (6) et, dans sa partie supérieure, au moins un logement (1h) pour l'une des deux extrémités d'un élément en saillie mobile (2), cet élément en saillie mobile (2) étant monté avec l'une des deux extrémités dans leur logement respectif (1h) sur le corps de base (1a) de façon à pouvoir pivoter depuis une position de travail jusqu'à une position de déclenchement (2r), la position de travail du ou des éléments en saillie (2) étant sécurisée par un dispositif de retenue (5, 5a) monté de manière à pouvoir se déplacer axialement (5s) à l'intérieur du dispositif de formage, la plaque de retenue (5a) de ce dispositif de retenue étant, en position de retenue, en tout ou partie intégrée dans un logement correspondant prévu à la surface supérieure du corps de base (1a) et sur les éléments en saillie (2), **caractérisé en ce que** les éléments en saillie (2) présentent à leurs extrémités un logement semi-cylindrique dans lequel s'engage une dent (1g) sortant du corps de base (1a).

2. Dispositif de formage par le vide selon la revendication 1, **caractérisé en ce que** la tige (5) du dispositif de retenue (5, 5a), qui se trouve verticalement dans le logement (1h) du corps de base (1a) dans lequel sont montées les extrémités (2g) comportant un logement essentiellement cylindrique des éléments en saillie (2), sécurise la position d'engagement des dites extrémités (2g) au niveau de la dent (1g) sortant du corps de base (1a).

3. Dispositif de formage par le vide selon les revendications 1 et 2, **caractérisé en ce que** la tige (5) du dispositif de retenue (5, 5a) est remplacée par un boulon correspondant, inséré de manière fixe dans le corps de base (1a), **en ce que** la plaque (5a) du dispositif de retenue est remplacée par une plaque montée de manière fixe à l'extrémité supérieure du boulon, et **en ce qu'**un jeu est prévu entre cette plaque et les éléments en saillie (2).
